# EUROPEAN PATENT SPECIFICATION

(11) **EP 2 127 790 B1**
(45) Date of publication and mention of the grant of the patent: **09.01.2013**
(21) Application number: 08710714.0
(22) Date of filing: 01.02.2008
(51) Int. Cl.: B23B 47/18, B23Q 5/22, B23Q 5/58, B23Q 15/08, B23Q 17/09

(54) **DRILLING APPARATUS**
BOHRVORRICHTUNG
APPAREIL DE PERÇAGE

(30) Priority: 05.02.2007 JP 2007025194
(43) Date of publication of application: 02.12.2009
(73) Proprietor: Nitto Kohki Co., Ltd., Tokyo 146-8555 (JP)
(72) Inventor: OTSUKA, Kenji, Tokyo 146-8555 (JP)
(74) Representative: Geyer, Ulrich F.
(86) International application number: PCT/JP2008/051682
(87) International publication number: WO 2008/096681

(56) References cited:
- JP-A- 01 016 348
- JP-A- 08 252 706
- JP-A- 61 056 810
- JP-A- 62 015 004
- JP-A- 63 283 807
- JP-A- 2003 025 122
- US-B1- 6 539 313

## Description

### Technical Field:

The present invention relates to a drilling apparatus that is used to drill a workpiece and capable of being equipped with cutting tools of different diameters. Background Art:

The load on a drilling apparatus varies according to various factors such as the diameter of an annular cutting tool (hereinafter referred to simply as "cutting tool"), the pressing force applied to a workpiece from the cutting tool, the kind and constituent material of the workpiece, and clogging of the flutes of the cutting tool with chips. If a cutting tool having a relatively small diameter is overloaded, the service life thereof may be shortened.

Under these circumstances, Patent Literature 1 note below discloses an overload monitoring apparatus that detects an electric current flowing through a driving motor (i.e. motor current) during drilling of a workpiece and that stops the drilling operation when the motor current has exceeded a preset reference value.

In a conventional drilling apparatus equipped with an automatic cutting tool feed mechanism, the feed rate is controlled in accordance with a change in the motor current. For example, when the motor current has exceeded a certain level, the feed rate control enters an intermittent operation mode in which the cycle of "full stop of feeding" and "feeding" is effected. In another example, when the motor current has exceeded a certain level during cutting, the control shifts to a mode of slower feeding than for the normal cutting operation. Thus, the conventional feed rate controls are performed by switching between two operation modes.
Patent Literature 1: Japanese Patent Application Publication No. 2005-52914
Prior art document US 6 539 313 B1, on which the preamble of claim 1 is based, describes a monitoring procedure and a monitoring installation for machine tools with a motor-driven work spindle and a separate protection device. The actual mass inertia moment of a tool fitted into the work spindle is determined by measurement and compared with a mass inertia moment calculated from the data of the tool.

### Disclosure of Invention:

### Technical Problem:

Conventionally, the feed rate control is effected with the same overload detection level irrespective of the size of the tool diameter. In this regard, as the tool diameter decreases, the rotational load torque decreases relative to the force applied in the thrust direction during cutting. Therefore, the feed is not stopped unless an excessively large force is applied to the cutting tool in the thrust direction. Accordingly, the cutting tool is heavily loaded, which shortens the service life of the cutting tool.

If the feed rate is too low, chips become fine and difficult to discharge. Eventually, the flutes of the cutting tool will be clogged with chips, and it will become impossible to discharge the chips, which may result in cutting failure. If the feed is fully stopped, chips may enter the area between the workpiece and the cutting edge. If such occurs, the cutting edge may fail to cut into the workpiece, resulting in cutting failure. This phenomenon is particularly remarkable in the case of a small-diameter cutting tool and leads to a reduction in service life of the cutting tool.

An object of the present invention is to solve such problems as the reduction in service life of cutting tools and the overloading of the motor, which are attributable to the tool diameter.

### Solution to Problem:

This and other objects are solved by a drilling apparatus having the features as set forth in claim 1. Preferred embodiments of the drilling apparatus are stated in the sub claims 2 to 5.

The present invention provides a drilling apparatus having an electric drill that rotationally drives a cutting tool by using a drill motor as a drive source, and a drill feed unit that reciprocates the electric drill relative to a workpiece. The electric drill and the drill feed unit are driven to drill the workpiece. The drilling apparatus comprises a motor current detector that detects an electric current flowing through the drill motor, and a controller that controls the energization of the drill motor. The controller makes identification of the tool diameter of the cutting tool being used for drilling on the basis of an electric current detected by the motor current detector at a predetermined drill feed rate and sets one of control modes provided for respective tool diameters according to the result of the identification.

Specifically, the controller sets a plurality of reference values corresponding to the tool diameters of usable cutting tools and compares the electric current detected by the motor current detector with the reference values to identify the tool diameter.

More specifically, the reference values include a first reference value measured by using a cutting tool having a predetermined first tool diameter and a second reference value measured by using a cutting tool having a second tool diameter smaller than the first tool diameter. The control modes are three different modes that are a large-diameter mode set when the detected electric current is not less than the first reference value, an intermediate-diameter mode set when the detected electric current is less than the first reference value and not less than the second reference value, and a small-diameter mode set when the detected electric current is less than the second reference value.

The controller performs a normal feed control for the drill feed unit after setting one of the control modes according to the tool diameter.

Further, the controller assigns to each of the control modes a control program corresponding to each tool diameter, and when a motor electric current detected by the motor current detector during execution of the control program exceeds a preset threshold value, the controller stops the drill motor and a feed motor of the drill feed unit.

### Brief Description of Drawings:

Fig. 1 is an outside view showing the general arrangement of a drilling apparatus as seen from the direction of an electric drill.
Fig. 2 is a right-hand side view of Fig. 1.
Fig. 3 is a circuit diagram illustrating the circuit configuration of the drilling apparatus shown in Fig. 1.
Fig. 4 is a flowchart showing processing carried out in an embodiment of the present invention.
Fig. 5 is a flowchart showing the details of normal feed control in Fig. 4.

### Best Mode for Carrying Out the Invention:

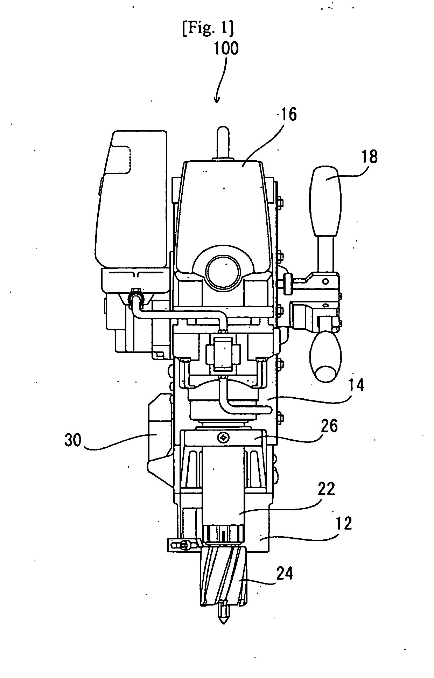

An embodiment of the drilling apparatus according to the present invention will be explained below with reference to Figs. 1 to 5.

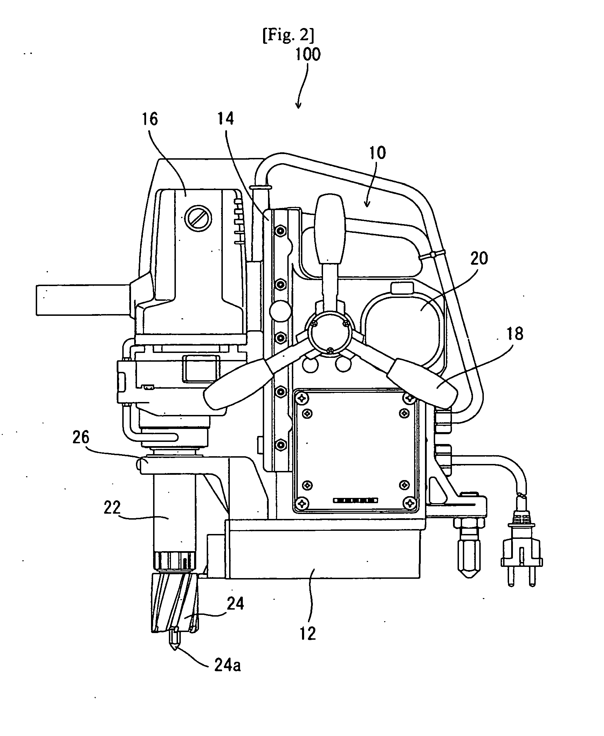

Figs. 1 and 2 are outside views showing the general arrangement of the drilling apparatus. Fig. 2 is a right-hand side view of Fig. 1.

### (Arrangement of the drilling apparatus)

As shown in Figs. 1 and 2, a drilling apparatus 100 has an electromagnetic base 12 provided at the bottom of its body 10. The electromagnetic base 12 has an electromagnet therein. A vertically movable slide plate 14 is provided on one side of the body 10. The slide plate 14 supports an electric drill 16.

The body 10 is further provided with a handle 18 and a drill feed unit 20 for vertically moving the slide plate 14. The drill feed unit 20 incorporates a feed motor, whereby the electric drill 16 can be vertically moved through a transmission mechanism in the drill feed unit 20. The electric drill 16 can be moved vertically by a manual operation. That is, the clutch of the output system for the feed motor is disengaged, and the handle 18 is rotated by hand to move the electric drill 16 vertically through the transmission mechanism in the drill feed unit 20.

The electric drill 16 incorporates a drill motor (AC motor). The rotation of the drill motor causes rotation of an annular cutting tool 24 attached to a spindle 22. The annular cutting tool 24 has a center pin 24a provided such that the center pin 24a can project from and withdraw into the lower end of the annular cutting tool 24. The spindle 22 is vertically movably supported by a bracket 26 extending sideward from a lower end portion of the body 10.

A rotary switch 30 is provided on the left-hand side (as seen in Fig. 1) of the body 10. The rotary switch 30 comprises a power switch 28 and an electric drill switch 34, which will be described later.

### (Operation of the drilling apparatus)

Next, a general operation of the drilling apparatus 100 will be explained.
In Figs. 1 and 2, the operator sets the drilling apparatus 100 at a predetermined position on a workpiece (not shown). Thereafter, the operator rotates the rotary switch 30 from "OFF" position to "Power ON" position to turn on the power switch 28 (explained later). Consequently, a voltage is applied to the electromagnet in the electromagnetic base 12, whereby the drilling apparatus 100 is secured to the workpiece. Next, the operator rotates the rotary switch 30 from "Power ON" position to "Electric Drill ON" position to turn on the electric drill switch 34 (explained later). Consequently, the drill motor of the electric drill 16 starts to rotate, causing the spindle 22, together with the annular cutting tool 24 attached thereto, to start rotating. In addition, the electric drill 16 is moved downward by the drill feed unit 20. As a result, the leading or lower end of the annular cutting tool 24 comes in contact with the surface of the workpiece. As the electric drill 16 further moves downward, the annular cutting tool 24 advances into the workpiece while rotating. Thus, a drilled hole can be formed in the workpiece.

Upon completion of the drilling, the feed motor is rotated reversely. When the electric drill 16 reaches a predetermined position, the feed motor and the electric drill 16 stop. If the operator wants to stop the drive of the electric drill 16, he or she rotates the rotary switch 30 from "Electric Drill ON" position to "Power ON" position to turn off the electric drill switch 34. As a result of the electric drill switch 34 being turned off, the energization of the drill motor is cut off, and the electric drill 16 stops rotation. In addition, the energization of the feed motor is cut off, and the downward movement of the electric drill 16 stops.

### (Circuit configuration of the drilling apparatus)

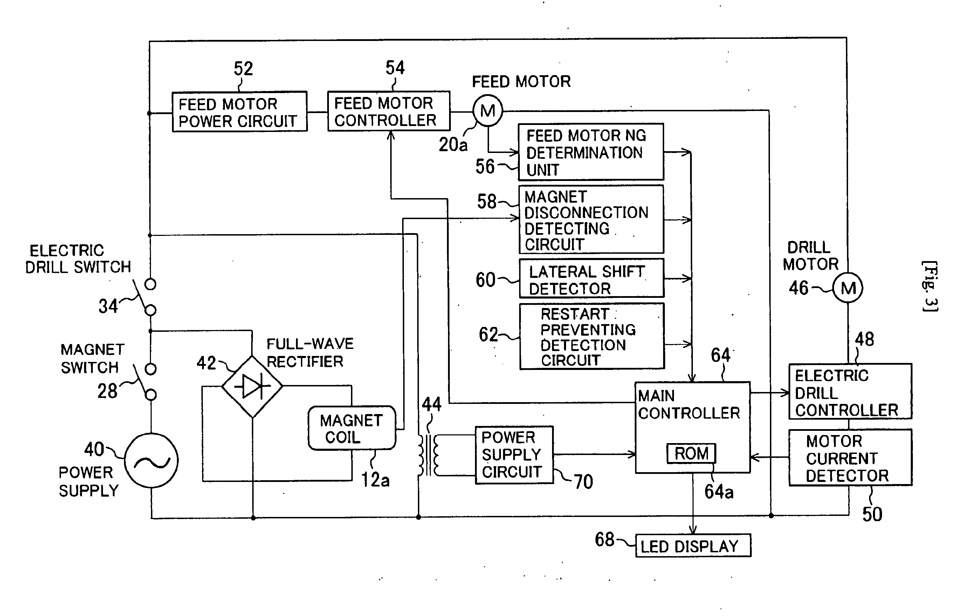

Fig. 3 is a circuit diagram showing the circuit configuration of the drilling apparatus 100.
An alternating-current (AC) power supply (e.g. AC100V) 40 is connected with a full-wave rectifier 42 through the power switch 28. The full-wave rectifier 42 is connected at the output thereof with a magnet coil 12a of the electromagnet in the electromagnetic base 12. Further, the AC power supply 40 is connected with a transformer 44 through the electric drill switch 34 and the power switch 28. The transformer 44 steps down the voltage of power supplied from the AC power supply 40.

Further, between the electric drill switch 34 and the AC power supply 40 are series-connected a drill motor 46, a drill motor controller 48 and a motor current detector 50 and also series-connected a feed motor power circuit 52, a feed motor controller 54 and a feed motor 20a of the drill feed unit 20.

The feed motor 20a is connected with a feed motor NG determination unit 56 that determines the condition of the feed motor 20a. The magnet coil 12a is connected with a magnet disconnection detecting circuit 58. The feed motor NG determination unit 56 and the magnet disconnection detecting circuit 58 are connected to a main controller 64 that controls the drill motor controller 48.

The main controller 64 is connected with a lateral shift detector 60 that detects a lateral shift of the drilling apparatus 100, a restart preventing detection circuit 62 that prevents restarting of the drill motor 46 that has been stopped, an LED display 68 that displays operating conditions, and a power supply circuit 70 that generates a direct-current power for the main controller 64 from the output voltage of the transformer 44.

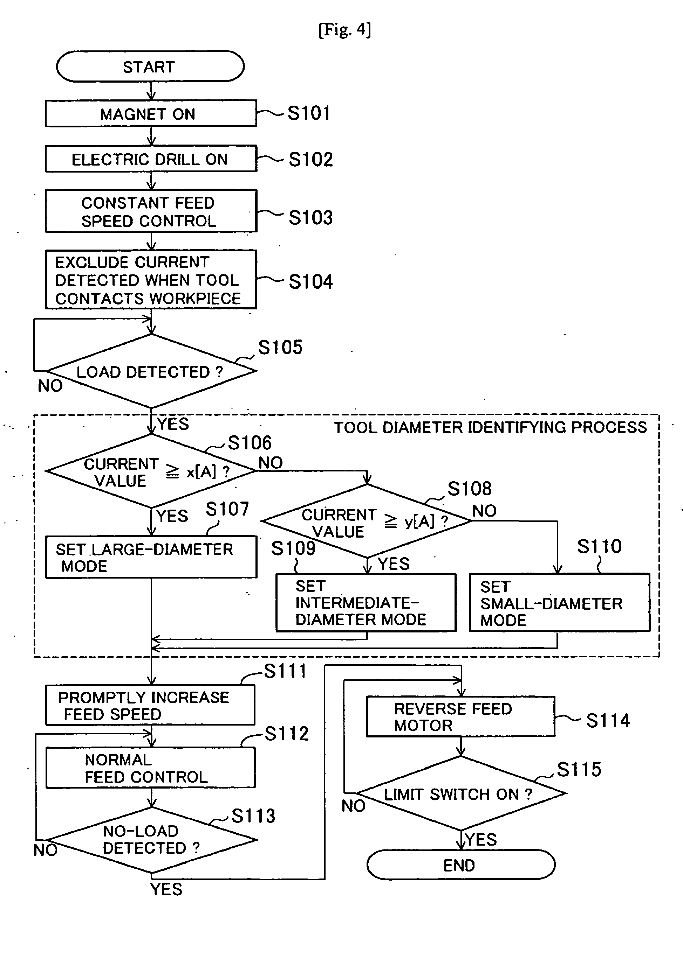

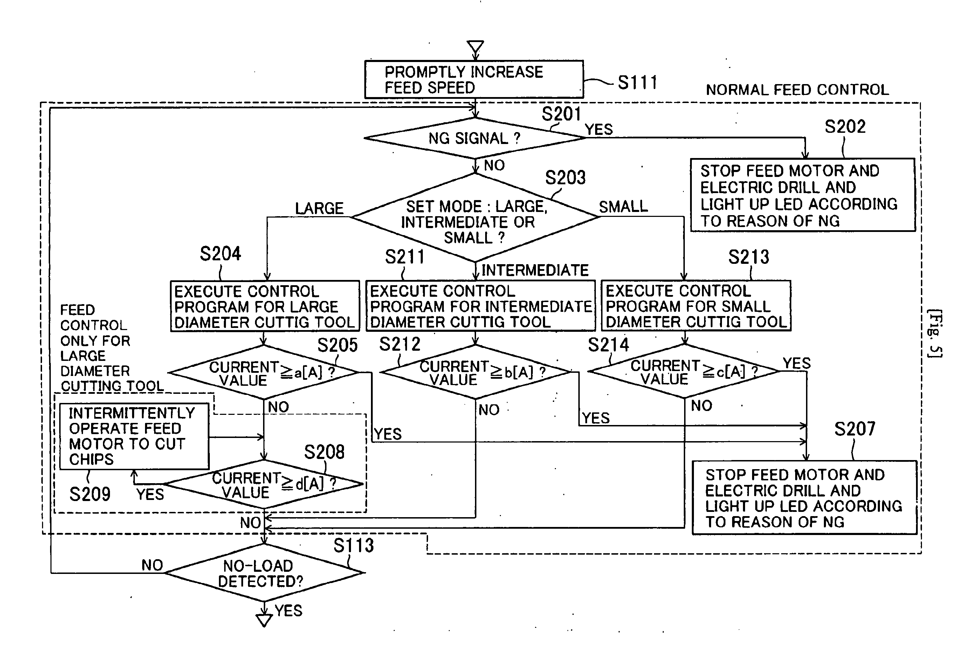

The main controller 64 comprises, for example, a CPU, a ROM 64a, a RAM and an interface circuit. The ROM 64a has stored therein programs containing processing operations shown in Figs. 4 and 5 and reference and threshold values used in the determining steps of the processing.

Fig. 4 is a flowchart showing processing carried out in the embodiment of the present invention. The processing is executed by the main controller 64.

### (Operation of the drilling apparatus)

Next, the operation of the drilling apparatus 100 will be explained with reference to Figs. 1 to 4.
First, the operator inserts the plug of the power cord into a power outlet and, thereafter, sets the drilling apparatus 100 at a predetermined position on a workpiece. Next, the operators rotates the rotary switch 30 from "OFF" position to "Power ON" position to turn on the power switch 28. Consequently, the voltage from the AC power supply 40 is applied to the full-wave rectifier 42, which, in turn, excites the magnet coil 12a (S101).

If, in this state, the rotary switch 30 is rotated from "Power ON" position to "Electric Drill ON" position to turn on the electric drill switch 34, the power supply circuit 70 operates to activate the main controller 64, which, in turn, activates the drill motor controller 48 to rotate the drill motor 46 (S 102).

Further, as a result of the electric drill switch 34 turning on, the feed motor power circuit 52 and the feed motor controller 54 operate to drive the feed motor 20a of the drill feed unit 20 so that the electric drill 16 moves downward at a constant feed rate (S103).

As a result of the downward movement of the electric drill 16 caused by the drill feed unit 20, the annular cutting tool 24 reaches the workpiece. In this regard, the electric current flowing through the drill motor 46 immediately after the annular cutting tool 24 has come in contact with the workpiece is unstable as compared to the motor current during drilling. Therefore, the motor current detected at this time is excluded from the detection results (S104). After the annular cutting tool 24 has contacted the workpiece, the main controller 64 determines the motor current Im of the drill motor 46 to detect a loaded condition (S105). If a loaded condition is detected (Yes at S105), the processing of identifying the tool diameter of the annular cutting tool 24 is executed.

First, the main controller 64 determines whether or not the value detected by the motor current detector 50 is not less than a reference value (S 106). As reference values, two values have been preset, i.e. a first reference value (hereinafter referred to as "reference value x") determined by preliminarily measuring a first cutting tool having a predetermined diameter, and a second reference value (hereinafter referred to as "reference value y") determined by preliminarily measuring a second cutting tool having a diameter smaller than the first tool diameter. Here, "the first tool diameter" and "the second tool diameter" are properly determined according to the configuration and constituent material of cutting tools to be used and the constituent material of workpieces.
If the motor current Im of the drill motor 46 is not less than the reference value x (A) (i.e. "motor current Im≧ reference value x"; Yes at S106), the main controller 64 determines that the diameter of the annular cutting tool 24 is a large diameter, and sets a large-diameter control mode (S 107).

If it is determined at step S 106 that "motor current Im<reference value x" (No at S106), the main controller 64 determines by using a reference value y(A) different from the reference value x (where x>y) whether or not "motor current Im≧ reference value y" is affirmative. (S108). If "motor current Im≧ reference value y" is determined to be affirmative (Yes at S108), the main controller 64 determines that the diameter of the annular cutting tool 24 is an intermediate diameter, and sets an intermediate-diameter control mode (S 109). If "motor current Im<reference value y" is affirmative (No at S108), the main controller 64 determines that the diameter of the annular cutting tool 24 is a small diameter, and sets a small-diameter control mode (S110).

Upon completion of any of the above-described steps S107, S109 and S110, the feed motor controller 54 executes the processing of gently increasing the feed rate of the drill feed unit 20 (S111). After a predetermined period of time, a normal feed control is executed (S 112). During the execution of this control, whether or not a no-load condition exists is detected by the motor current detector 50 and the main controller 64 every a predetermined time (S113).

If a no-load condition is detected (Yes at S113), the main controller 64 determines that the drilling of the workpiece has been completed, and reversely rotates the feed motor 20a of the drill feed unit 20 to move the electric drill 16 upward (S 114). When a limit switch provided in the drill feed unit 20 is turned on in the course of the upward movement of the electric drill 16, the rotation of the electric drill 16 is stopped, and the feed motor 20a is stopped (S115). It should be noted that if a no-load condition is not detected (No at S113), the control process returns to step S 112 to continue the normal feed control.

### (Normal feed control)

Fig. 5 is a flowchart showing the details of the normal feed control executed at step S 112 in Fig. 4. It should be noted that threshold values a, b, c and d(A) used in the following processing are related to each other as follows: a>b>c and a>d.

Upon completion of the processing at the above-described step S111, the main controller 64 checks whether or not there is an NG signal from the feed motor NG determination unit 56, the magnet disconnection detecting circuit 58, the lateral shift detector 60 and so forth (S201). If there is an NG signal (Yes at S201), the main controller 64 stops the feed motor 20a and the electric drill 16 and lights up the LED display 68 according to the reason of NG (S202).

If there is no NG signal (No at S201), the main controller 64 checks the control mode set on the basis of the tool diameter determined at step S 106 or S 108, i.e. checks which of the large-, intermediate- and small-diameter control modes has been set (S203), and executes a control program according to the set operating mode (S204, S211, or S213). If the large-diameter control mode has been set (Large at S203), the main controller 64 executes a control program for large diameter (S204) to control the drilling operation at a feed rate suitable for the large diameter and to rate up or slow down the feed according to the motor current Im of the drill motor 46. Subsequently, the main controller 64 compares the motor current Im of the drill motor 46 with a threshold value a(A) (S205). If it is determined that "motor current Im≧ threshold value a" (Yes at S205), it means that an overload condition exists. Therefore, the main controller 64 stops the feed motor 20a and the electric drill 16 and lights up the LED display 68 (S207).

If the main controller 64 determines that "motor current Im<threshold value a" at step S205 (No at S205), the motor current Im of the drill motor 46 is compared with a threshold value d(A) (S208). If the main controller 64 determines that "motor current Im≧ threshold value d" (Yes at S208), the feed motor 20a is intermittently operated to cut chips (S209). The intermittent operation of the feed motor 20a (S209) is repeated until it is determined at step S208 that "motor current Im≧ threshold value d" is not affirmative (i.e. No at S208) as a result of chips being cut and consequently the load on the drill motor 46 being reduced.

If it is determined at step S208 that "motor current Im<threshold value d" (No at S208), the main controller 64 executes the processing at step S113, which has been explained in connection with Fig. 4. If a no-load condition is detected (Yes at S 113), the main controller 64 further executes the processing at steps S 114 and S 115 to terminate the drilling operation, as has been stated above.

If it is determined at step S203 that the set control mode is the intermediate-diameter control mode (Intermediate at S203), the main controller 64 executes a control program for intermediate diameter (S211) to control the drilling operation at a feed rate appropriate for the intermediate diameter and to speed up or slow down the feed according to the motor current Im of the drill motor 46. Subsequently, the main controller 64 compares the motor current Im with a threshold value b(A) (S212). If it is determined that "motor current Im≧ threshold value b" (Yes at S212), it means that an overload condition exists. Therefore, the main controller 64 stops the feed motor 20a and the electric drill 16 and lights up the LED display 68 (S207).

If it is determined at step S203 that the set control mode is the small-diameter control mode (Small at S203), the main controller 64 executes a control program for small diameter (S213) to control the drilling operation at a feed rate appropriate for the small diameter and to speed up or slow down the feed according to the motor current Im of the drill motor 46. Further, the main controller 64 compares the motor current Im with a threshold value c(A), and if it is determined that "motor current Im≧ threshold value c" (Yes at S214), it means that an overload condition exists. Therefore, the main controller 64 stops the feed motor 20a and the electric drill 16 and lights up the LED display 68 (S207).

If the main controller 64 determines at step S212 that "motor current Im<threshold value b" (No at S212) or determines at step S214 that "motor current Im<threshold value c" (No at S214), the main controller 64 executes the processing at step S 113, which has been explained in connection with Fig. 4. If a no-load condition is detected (Yes at S 113), the main controller 64 executes the processing at steps S 114 and S 115 to terminate the drilling operation, as has been stated above.

As has been explained above, the tool diameter of the annular cutting tool 24 is determined whether it is a small, intermediate or large diameter. In the case of a small-diameter cutting tool, the drilling operation is controlled so that the drill feed is not fully stopped and the feed rate is not too low to prevent tool damages incidental to a small-diameter cutting tool as stated in the background of the invention. In the case of a large-diameter cutting tool, if the feed rate is too high, the annular cutting tool 24 is easily overloaded and the overload protection function works immediately to stop the drilling operation undesirably. Therefore, an intermittent operation is applied to the feed control to cope with the situation as shown in steps S208 and S209. In the case of a large-diameter cutting tool, an alternative control may be applied instead of the above when the current value of the electric drill 16 exceeds a certain level, whereby the drill feed is not fully stopped and the feed rate is not too high. Regarding an intermediate-diameter cutting tool, it is possible to select a feed control similar to that for a small-diameter cutting tool or a large-diameter cutting tool according to the tool diameter, for example. Thus, it is possible to set a feed rate appropriate for an intermediate-diameter cutting tool.

As has been stated above, according to the foregoing embodiment, the tool diameter of the annular cutting tool 24 is detected and classified as one of large, intermediate and small diameters, and an overload detection level is set to a value appropriate for the large, intermediate or small diameter. Further, the feed control is changed according to the circumstances. Therefore, the service life and durability of cutting tools can be improved without impairing the operability. In addition, burning of the drill motor 46 can be prevented.

In the foregoing embodiment, the control modes are provided for three different tool diameters, i.e. large, intermediate and small tool diameters. It should be noted, however, that control modes may be provided for two or four or more different tool diameters.

## Claims

1. A drilling apparatus (100) having an electric drill (16) that comprises a drill motor (46) to rotationally drive a cutting tool (24) and a drill feed unit (20) that reciprocates the electric drill (16) relative to a workpiece, in which the electric drill (16) and the drill feed unit (20) are driven to drill the workpiece, the drilling apparatus (100) comprising:
a motor current detector (50) that detects an electric current flowing through the drill motor (46); and
a controller (48) that controls energization of the drill motor (46); **characterized in that**
the controller (48) makes identification of a tool diameter of the cutting tool (24) being used for drilling on a basis of an electric current detected by the motor current detector (50) at a predetermined drill feed rate after the anular cutting tool (24) has contacted the workpiece and sets one of control modes provided for respective tool diameters according to a result of the identification.

2. The drilling apparatus (100) of claim 1, wherein the controller (48) compares the electric current detected by the motor current detector (50) with one or more reference values corresponding to diameters of cutting tools (24) usable in the drilling apparatus (100) to identify the tool diameter of the cutting tool (24) used.

3. The drilling apparatus (100) of claim 2, wherein the reference values comprise a first reference value predetermined by preliminarily measuring a cutting tool (24) having a first diameter and a second reference value predetermined by preliminarily measuring a second cutting tool (24) having a second diameter smaller than the first tool diameter;
the control modes comprising a large-diameter control mode set when the electric current detected is not less than the first reference value, an intermediate-diameter control mode set when the electric current detected is less than the first reference value and not less than the second reference value, and a small-diameter control mode set when the electric current detected is less than the second reference value.

4. The drilling apparatus (100) of claim 1, wherein the controller (48) performs a feed control for the drill feed unit (20) after setting one of the control modes according to the set control mode.

5. The drilling apparatus (100) of claim 4, wherein the controller (48) stops the drill motor (46) and a feed motor (20a) of the drill feed unit (20) when the motor current detector (50) detects that a motor electric current exceeds a preset threshold value for each control mode during execution of the feed control.

## Patentansprüche

1. Bohrvorrichtung (100) mit einem elektrischen Bohrer (16), der einen Bohrmotor (46) zum Drehantrieb eines Schneidwerkzeuges (24) und eine Bohrvortriebseinheit (20) umfasst, die den elektrischen Bohrer (16) bezüglich eines Werkzeugs hin- und herbewegt, in dem der elektrische Bohrer (16) und die Bohrvortriebseinheit (20) zum Bohren des Werkstücks angetrieben werden, wobei die Bohrvorrichtung (100) umfasst:
einen Motorstrom-Detektor (50), der einen durch den Bohrmotor (46) fließenden elektrischen Strom detektiert; und
eine Steuer- bzw. Regeleinrichtung (48), die die Strombeaufschlagung des Bohrmotors (46) steuert bzw. regelt, **dadurch gekennzeichnet, dass**
die Steuer- bzw. Regeleinrichtung (48) die Identifikation eines Werkzeugdurchmessers des Schneidwerkzeugs (24) vornimmt, das für das Bohren verwendet wird, auf einer Basis des mit dem Motorstrom-Detektors (50) detektierten elektrischen Stroms bei einer vorgegebenen Bohrvortriebsrate, nachdem das ringförmige Schneidwerkzeug (24) das Werkstück berührt hat, und einen der Steuer- bzw. Regelmodi einstellt, die für jeweilige Werkzeugdurchmesser vorgesehen sind, entsprechend einem Ergebnis der Identifikation.

2. Bohrvorrichtung (100) nach Anspruch 1, wobei die Steuer- bzw. Regelvorrichtung (48) den vom Motorstrom-Detektor (50) detektierten elektrischen Strom mit einem oder mehreren Bezugswerten entsprechend den Durchmessern der Schneidwerkzeuge (24) vergleicht, die in der Bohrvorrichtung (100) verwendbar sind, um den Werkzeugdurchmesser des verwendeten Schneidwerkzeugs (24) zu identifizieren.

3. Bohrvorrichtung (100) gemäß Anspruch 1, wobei die Bezugswerte einen ersten Bezugswert, der durch vorausgehende Messung eines Schneidwerkzeugs (24) mit einem ersten Durchmesser vorgegebenen ist, und einen zweiten Bezugswert umfasst, der durch vorausgehende Messung eines zweiten Schneidwerkzeugs (24) mit einem zweiten Durchmesser vorgegeben ist, der kleiner als der erste Durchmesser ist;
wobei die Steuer- bzw. Regelmodi umfassen einen Großdurchmesser-Steuer- bzw. Regelmodus, der eingestellt ist, wenn der detektierte elektrische Strom nicht kleiner als der erste Bezugswert ist, einen Zwischendurchmesser-Steuer- bzw. Regelmodus, der eingestellt ist, wenn der detektierte elektrische Strom kleiner als der erste Bezugswert und nicht kleiner als der zweite Bezugswert ist, sowie einen Kleindurchmesser-Steuer- bzw. Regelmodus, der eingestellt ist, wenn der detektierte elektrische Strom kleiner als der zweite Bezugswert ist.

4. Bohrvorrichtung (100) nach Anspruch 1, wobei die Steuer- bzw. Regeleinrichtung (48) eine Vortriebssteuerung- bzw. Regelung für die Bohrvortriebseinheit (20) nach Einstellen von einem der Steuer- bzw. Regelmodi entsprechend dem eingestellten Steuer- bzw. Regelmodus steuert bzw. regelt.

5. Bohrvorrichtung (100) nach Anspruch 4, wobei die Steuer- bzw. Regeleinrichtung (48) den Bohrmotor (46) und einen Vortriebsmotor (20a) der Bohrvortriebseinheit (20) anhält, wenn der Motorstrom-Detektor (50) detektiert, dass ein elektrischer Motorstrom über einen voreingestellten Schwellwert für jeden Steuer- bzw. Regelmodus während der Durchführung der Vortriebssteuerung- bzw. Regelung ansteigt.

## Revendications

1. Appareil de perçage (100) comportant une perceuse électrique (16) qui comprend un moteur de perceuse (46) pour entraîner en rotation un outil de coupe (24) et une unité d'avance de perçage (20) qui fait aller et venir la perceuse électrique (16) par rapport à une pièce à travailler, dans lequel la perceuse électrique (16) et l'unité d'avance de perçage (20) sont entraînées pour percer la pièce à travailler, l'appareil de perçage (100) comprenant :
un détecteur de courant de moteur (50) qui détecte un courant électrique passant dans le moteur de perceuse (46) ; et
un contrôleur (48) qui contrôle l'activation du moteur de perceuse (46) ; **caractérisé en ce que**
le contrôleur (48) fait l'identification d'un diamètre d'outil de l'outil de coupe (24) qui est utilisé pour le perçage en fonction du courant électrique détecté par le détecteur de courant de moteur (50) à une vitesse d'avance de perçage prédéterminée après que l'outil de coupe annulaire (24) a contacté la pièce, et établit l'un de plusieurs modes de commande, prévus pour des diamètres d'outils respectifs, en fonction du résultat de l'identification.

2. Appareil de perçage (100) selon la revendication 1, dans lequel le contrôleur (48) compare le courant électrique détecté par le détecteur de courant de moteur (50) à une ou plusieurs valeurs de référence correspondant à des diamètres d'outils de coupe (24) utilisables dans l'appareil de perçage (100) pour identifier le diamètre de l'outil de coupe (24) utilisé.

3. Appareil de perçage (100) selon la revendication 2, dans lequel les valeurs de référence comprennent une première valeur de référence prédéterminée par une mesure préliminaire d'un outil de coupe (24) ayant un premier diamètre et une deuxième valeur de référence prédéterminée par une mesure préliminaire d'un deuxième outil de coupe (24) ayant un deuxième diamètre inférieur au premier diamètre d'outil ;
les modes de commande comprenant un mode de commande de grand diamètre, établi lorsque le courant détecté n'est pas inférieur à la première valeur de référence, un mode de commande de diamètre intermédiaire établi lorsque le courant électrique détecté est inférieur à la première valeur de référence et pas inférieur à la deuxième valeur de référence, et un mode de commande de petit diamètre établi lorsque le courant électrique détecté est inférieur à la deuxième valeur de référence.

4. Appareil de perçage (100) selon la revendication 1, dans lequel le contrôleur (48) réalise une commande d'avance pour l'unité d'avance de perçage (20), après avoir établi l'un des modes de commande, en fonction du mode de commande établi.

5. Appareil de perçage (100) selon la revendication 4, dans lequel le contrôleur (48) arrête le moteur de perceuse (46) et un moteur d'avance (20a) de l'unité d'avance de perçage (20) lorsque le détecteur de courant de moteur (50) détecte que le courant électrique du moteur dépasse une valeur de seuil pré-réglée pour chaque mode de commande pendant l'exécution de la commande d'avance.
